(19) Europäisches Patentamt
European Patent Office
Office européen des brevets

(11) Publication number : **0 111 663 B2**

(12) # NEW EUROPEAN PATENT SPECIFICATION

(45) Date of publication of the new patent specification : **22.01.92 Bulletin 92/04**

(51) Int. Cl.$^5$ : **B01D 61/24,** B01D 71/50, A61M 1/16

(21) Application number : **83110164.7**

(22) Date of filing : **12.10.83**

(54) **Membrane and process for producing the membrane.**

(30) Priority : **16.11.82 SE 8206515**

(43) Date of publication of application : **27.06.84 Bulletin 84/26**

(45) Publication of the grant of the patent : **23.12.87 Bulletin 87/52**

(45) Mention of the opposition decision : **22.01.92 Bulletin 92/04**

(84) Designated Contracting States : **AT BE CH DE FR GB IT LI LU NL**

(56) References cited :
**EP-A- 0 012 630**
**EP-A- 0 024 600**
**EP-A- 0 044 958**
**EP-A- 0 045 435**
**EP-A- 0 046 816**
**EP-A- 0 046 817**
**DE-A- 2 823 985**
**DE-A- 2 921 138**
**FR-A- 2 265 807**
**US-A- 3 957 651**
**US-A- 4 075 108**
**US-A- 4 308 145**
**Journal of Membrane Science 5(1979), pp. 23-49**
**Journal of Applied Polymer Science, vol. 20 (1976), pp. 2377-2394**

(73) Proprietor : **GAMBRO, INC.**
**2387 Kelsey Road**
**Barrington, Ill. 60010 (US)**
Proprietor : **Gambro Dialysatoren GmbH & Co. KG**
**Postfach 1323**
**W-7450 Hechingen (DE)**
Proprietor : **Gambro Lundia AB**
**Box 10101**
**S-220 10 Lund (SE)**

(72) Inventor : **Konstantin, Peter**
**2341 E. Evergreen Ave.**
**West Covina, Ca. 91791 (US)**
Inventor : **Goehl, Hermann Joseph**
**Ganswies 8**
**W-7457 Bisingen-Zimmern (DE)**
Inventor : **Ohmayer, Maria Theresia**
**Hofgasse 1**
**W-7457 Bisingen (DE)**
Inventor : **Buck, Reinhold Johann**
**Ortsstrasse 27**
**W-7941 Alleshausen (DE)**
Inventor : **Gullberg, Claes-Ake**
**Höstagillesvägen 32**
**S-221 51 Lund (SE)**

(74) Representative : **Boberg, Nils Gunnar Erik et al**
**Gambro AB Patent Department Box 10101**
**S-220 10 Lund (SE)**

EP 0 111 663 B2

## Description

This invention relates to a flat sheet membrane which is particularly, though not exclusively, suitable for use in so-called simultaneous hemodialysis/hemofiltration, prepared from a polycarbonate block copolymer, preferably a polyetherpolycarbonate block copolymer.

Furthermore, the invention relates to a process for producing this membrane, according to which a polymer solution of a polycarbonate block copolymer, preferably a polyetherpolycarbonate block copolymer, is cast or extruded to form a flat sheet, which is gelled and subsequently washed and dried.

The invention will be described with particular reference to the so-called simultaneous hemodialysis/hemofiltration, but it should however already now be noted that the present membrane in its broadest aspect is not restricted to only this particular use. It may as well be used in normal hemodialysis as in normal hemofiltration, and generally speaking, it may be used whenever it is intended or desired to separate a solute from a solution irrespective of whether this separation is carried out by diffusive or convective solute transport through the membrane, as will be apparent from the following description.

### TECHNICAL BACKGROUND

To be suitable for use in so-called simultaneous hemodialysis/hemofiltration, for which use the present membrane is particularly adapted, a membrane should be not only highly hydraulic permeable, but should also and simultaneously have high diffusive as well as high convective permeabilities to solutes to be separated. In other words, such a membrane should as much as possible have the membrane characteristics of a hemodialysis membrane and a hemofiltration membrane at one and the same time.

As examples of known hemodialysis membranes may be mentioned the membranes described in for example the US-A-4 069 151, 4 075 108, and 4 308 145, and as examples of known hemofiltration membranes may be mentioned the membrane described in for example EP-A-0 046 816.

An object of the present invention is thus to provide a membrane which has the combined membrane characteristics of a hemodialysis membrane and the hemofiltration membrane and which is therefor particularly, though not exclusively, suitable for use in so-called simultaneous hemodialysis/hemofiltration.

A further object is to provide a process for producing this membrane.

These and still further objects are achieved by means of the membrane and the process as defined in the accompanying claims and which will be further illustrated in the following description.

The present invention may be said to be an improvement of any of the inventions described in the above mentioned patent publications.

### BRIEF DESCRIPTION OF THE INVENTION

According to the present invention there is thus provided a flat sheet membrane which is particularly, though not exclusively, adapted for use in connection with so-called simultaneous hemodialysis/hemofiltration. The membrane is characterized by having a hydraulic permeability to water of between 7,5 and 75 ml/m$^2$.h.mbar, preferably 23-28 ml/m$^2$.h.mbar, and by having a diffusive permeability to chloride ($C1^-$) of more than 10 x $10^{-4}$ cm/s, preferably of more than 12 x $10^{-4}$ cm/s, a diffusive permeability to vitamin $B_{12}$ of more than 2 x $10^{-4}$ cm/s, preferably of more than 3 x $10^{-4}$ cm/s, and a diffusive permeability to inulin of more than 0.5 x $10^{-4}$ cm/s, preferably more than 1.0 x $10^{-4}$ cm/s and in that the membrane retains albumin having a molecule weight of 68 000 Daltons.

According to the present invention there is also provided a process for producing a flat sheet membrane which is particularly, though not exclusively, adapted for use in so-called simultaneous hemodialysis/hemofiltration, according to which a polymer solution of a polycarbonate block copolymer, preferably a polyetherpolycarbonate block copolymer, is cast or extruded to form a flat sheet, which is gelled and subsequently washed and dried. The process is characterized in that said polymer solution is containing a high molecular weight swelling agent having a molecular weight within the range of from 3000 to 15 000 Daltons and in that the extruded flat sheet is exposed to partial evaporation of solvent prior to said gelling.

### DETAILED DESCRIPTION OF INVENTION

The cut-off value of the membrane can be set at any predetermined value depending on the intended use of the membrane. When the membrane is intended for use in extra-corporeal treatment of blood it is however desired to set the cut-off such that toxic uremic substances (metabolites) will freely pass through the membrane, while for example albumin ($M_w$ = 68 000 Daltons) is retained. A preferred cut-off value is about 50 000 Daltons.

The most preferred polymer is a polyetherpolycarbonate block copolymer, preferably a bisphenol A/polyalkylene oxide polycondensate containing 5-35% by weight of polyalkylene oxide, preferably 20%, and having the general formula

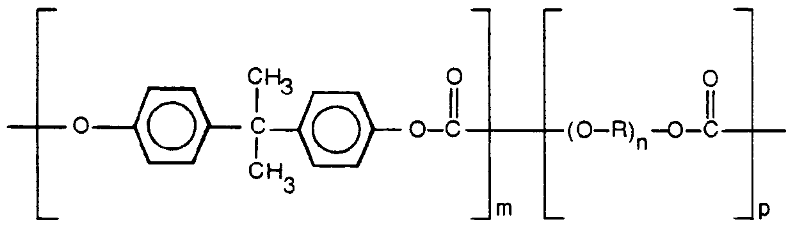

wherein R is designating $CH_2CH_2$,

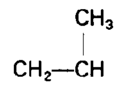

or combinations of $CH_2$-CH=CH and CH=CH, preferably $CH_2CH_2$, m and p are chosen such that the bisphenol A carbonate unit is about 95 to 65% of the weight of the recurring unit and the alkylene oxide unit is about 5 to 35% of the weight of the recurring unit, and wherein n = 10 - 220, preferably 182.

The thickness of the present membrane may vary within wide limits and is usually within the range of from 10 to 60 μm. A preferred thickness is 25-45 μm.

A suggested hereinabove, it is essential in the process according to the present invention to combine the use of a high molecular weight swelling agent (to form a highly water and solute permeable porous structure) and partial evaporation of solvent (to form a denser layer which restricts the permeability of the membrane to solutes) prior to gelling the extruded membrane.

By the term "high molecular weight" swelling agent in accordance with the present invention is meant swelling agents having a molecular weight within the range of from 3 000 to 15 000 Daltons.

Examples of such high molecular weight swelling agents are polyethylene glycols, preferably a polylethylene glycol having a molecular weight of 8 000 Daltons, and polypropylene oxide-polyethylene oxide block copolymers, such as Pluronic® F 68 (BASF Wyandotte). Further examples may be dextran, inulin and polyvinylpyrrolidone.

Suitable high molecular weight swelling agents in accordance with the present invention are however not restricted to the above-mentioned swelling agents, but any known swelling agent which has a high molecular weight, as defined hereinabove, being soluble in the polymer solution, and being removable in the gelation bath could be used.

According to the present invention such high molecular weight swelling agents are in general used in amounts ranging from 1 up to 8% by weight in the polymer solution. Preferably, they are used in amounts of 2-5% by weight.

Suitable polymers to be used in the process according to the present invention may be chosen among polycarbonate block copolymers such as polyether-polycarbonate block copolymers and organopolysiloxane-polycarbonate block copolymers.

The most preferred polymer is however a polyetherpolycarbonate block copolymer, preferably a bisphenol A/polyalkylene oxide polycondensate containing 5-35% by weight of polyalkylene oxide, preferably 20%, and having the general formula

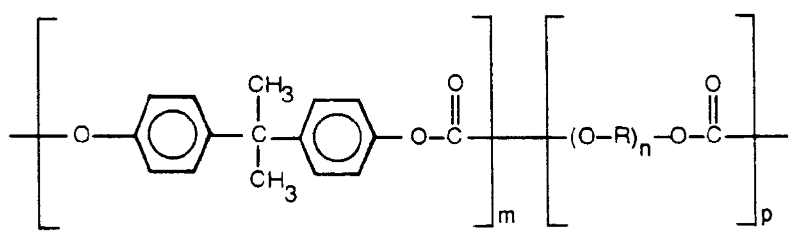

wherein R is designating $CH_2$,$CH_2$,

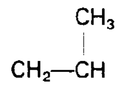

or combinations of $CH_2$-CH=CH and CH=CH, preferably $CH_2CH_2$, m and p are chosen such that the bisphenol A carbonate unit is about 95 to 65% of the weight of the recurring unit and the alkylene oxide unit is about 5 to 35% of the weight of the recurring unit, and wherein n = 10 - 220, preferably 182.

The polymer solution is generally formed to have a viscosity within the range of from 4 000 to 50 000 mPa·s. A preferred viscosity range is 18 000-25 000 mPa·s.

The present invention will be further illustrated by means of the following examples.

Example 1

A filtered polymer solution, prepared from 85.7% by weight of dioxolane, 12.25% by weight of polyether-polycarbonate block copolymer, and 2.05% by weight of polyethylene glycol ($M_w$ = 3 400) with a viscosity of 18 000 mPa·s was extruded via a doctor blade onto a moving substrate. After evaporation of about 20% of the dioxolane, the extruded membrane was precipitated in a water bath, removed from the substrate, washed free of dioxolane and polyethylene glycol, stabilized in an ethanol/glycerol/water mixture, and dried with air.

The resultant membrane had the following properties:

| | |
|---|---|
| Ultrafiltration rate: | 16 ml/$m^2$·h·mbar |
| Diffusive permeability to chloride: | $13.0 \times 10^{-4}$ cm/s |
| $B_{12}$: | $5.0 \times 10^{-4}$ cm/s |
| inulin: | $0.8 \times 10^{-4}$ cm/s |
| Thickness | 28 µm |

Example 2

A filtered polymer solution, prepared from 84.3% by weight of dioxolane, 12.1% by weight of polyether-polycarbonate block copolymer, and 3.6% by weight of polyethylene glycol ($M_w$ = 8 000) with a viscosity of 20 000 mPa·s was extruded via a doctor blade onto a moving substrate. After evaporation of about 25% of the dioxolane the membrane was precipitated in a water bath, removed from the substrate, washed free from dioxolane and polyethylene glycol, stabilized in a glycerol/water mixture, and dried in warm air.

The resultant membrane had the following properties:

| | |
|---|---|
| Ultrafiltration rate: | 43 ml/$m^2$·h·mbar |
| Diffusive permeability to chloride: | $13.8 \times 10^{-4}$ cm/s |
| $B_{12}$: | $5.2 \times 10^{-4}$ cm/s |
| inulin: | $1.7 \times 10^{-4}$ cm/s |
| Thickness: | 45 µm |

Example 3

A filtered polymer solution, prepared from 86.6% by weight of dioxolane, 12.2% by weight of polyether-polycarbonate block copolymer, and 1.2% by weight of Pluronic® F68 (BASF Wyandotte) with a viscosity of 22 000 mPa·s was extruded via a doctor blade onto a moving substrate. After evaporation of about 20% of the dioxolane, the membrane was precipitated in a water bath, removed from the substrate, washed free of dioxolane and Pluronic® F68, stabilized in an ethanol/glycerol/water mixture, and dried with air.

The resultant membrane had the following properties:

| | |
|---|---|
| Ultrafiltration rate: | 10 ml/$m^2 \cdot h \cdot$ mbar |
| Diffusive permeability to chloride: | $12.1 \times 10^{-4}$ cm/s |
| $B_{12}$: | $4.6 \times 10^{-4}$ cm/s |
| inulin: | $1.7 \times 10^{-4}$ cm/s |
| Thickness: | 28 μm |

In the following table the effect of molecular weight of polyethylene glycol (PEG), used as swelling agent, on ultrafiltration rate of a membrane obtained in the process according to the present invention is illustrated.

| Swelling agent/ Molecular weight | Ultrafiltration rate (ml/$m^2 \cdot h \cdot$ mbar) |
|---|---|
| PEG 1540 | 7 |
| PEG 3400 | 16 |
| PEG 8000 | 38 |
| PEG 18500 | 9 |
| PEG 20000 | 7 |

The table shows the effect of equal amounts of polyethylene glycols of various molecular weight added to the polymer solution upon ultrafiltration rate of the obtained membrane. A maximum can be observed for polyethylene glycol having a molecular weight of 8 000 Daltons. The use of PEG swelling agents having molecular weights of 1540, 18500 and 20000 does not belong to the present invention.

## Claims

1. A flat sheet membrane which is particularly, though not exclusively, adapted for use in so-called simultaneous hemodialysis/hemofiltration, prepared from a polycarbonate block copolymer, preferably a polyether-polycarbonate block copolymer, **characterized** by having a hydraulic permeability to water of between 7,5 and 75 ml/$m^2$.h.mbar, preferably 23-38 ml/$m^2$.h.mbar, and by having a diffusive permeability to chloride ($Cl^-$) of more than 10 x $10^{-4}$ cm/s, preferably of more than 12 x $10^{-4}$ cm/s, a diffusive permeability to vitamin $B_{12}$ of more than 2 x $10^{-4}$ cm/s, preferably of more than 3 x $10^{-4}$ cm/s, and a diffusive permeability to inulin of more than 0.5 x $10^{-4}$ cm/s, preferably or more than 1.0 x $10^{-4}$ cm/s and in that the membrane retains albumin having a molecule weight of 68 000 Daltons.

2. Membrane according to claim 1, **characterized** by having a cut-off value of 50 000 Daltons.

3. Membrane according to any of claims 1-2, **characterized** by having a thickness of 20-60 μm, preferably 25-45 μm.

4. Process for producing a membrane according to claim 1, wherein a polymer solution of a polycarbonate block copolymer, preferably a polyetherpolycarbonate block copolymer, is cast or extruded to form a flat sheet, which is gelled and subsequently washed and dried, **characterized** in that said polymer solution is containing a high molecular weight swelling agent having a molecular weight within the range of from 3000 to 15 000 Daltons and in that the extruded flat sheet is exposed to partial evaporation of solvent prior to said gelling.

5. Process according to claim 4, **characterized** in that said swelling agent is used in an amount of from 1 to 8% by weight, preferably from 2 to 5% by weight.

6. Process according to any of claims 4-5, **characterized** in that said swelling agent is chosen among polyethylene glycols, polypropylene oxide-polyethylene oxide block copolymers, dextran, inulin, and polyvinylpyrrolidone.

7. Process according to claim 6, **characterized** in that said swelling agent is a polyethylene glycol having a molecular weight of 8000 Daltons.

8. Process according to any of claims 4-7, **characterized** in that the polymer solution has a viscosity of

from 4000 to 50 000 mPa.s, preferably 18 000-25 000 mPa.s.

## Patentansprüche

1. Membran in Form eines flachen Bogens, die besonders, obwohl nicht ausschließlich, für die Verwendung in sogenannter gleichzeitiger Hämodialyse/Hämofiltration geeignet ist und aus einem Polycarbonatblockcopolymer, vorzugsweise einem Polyetherpolycarbonatblockcopolymer, hergestellt ist, dadurch gekennzeichnet, daß sie eine hydraulische Durchlässigkeit für Wasser zwischen 7,5 und 75 ml/m$^2$ . h . mbar, vorzugsweise von 23 bis 38 ml/m$^2$ . h . mbar hat und eine Diffusionsdurchlässigkeit für Chlorid ($Cl^-$) von mehr als 10 x $10^{-4}$ cm/s, vorzugsweise von mehr als 12 x $10^{-4}$ cm/s, eine Diffusionsdurchlässigkeit für Vitamin $B_{12}$ von mehr als 2 x $10^{-4}$ cm/s, vorzugsweise von mehr als 3 x $10^{-4}$ cm/s und eine Diffusionsdurchlässigkeit für Inulin von mehr als 0,5 x $10^{-4}$ cm/s, vorzugsweise von mehr als 1,0 x $10^{-4}$ cm/s hat und daß die Membran Albumin mit einem Molekulargewicht von 68.000 Dalton zurückhält.

2. Membran nach Anspruch 1, dadurch gekennzeichnet, daß sie eine Molekulargewichtsausschlußgrenze von 50.000 Dalton hat.

3. Membran nach einem der Ansprüche 1 bis 2, dadurch gekennzeichnet, daß sie eine Dicke von 20 bis 60 μm, vorzugsweise von 25 bis 45 μm hat.

4. Verfahren zur Herstellung einer Membran nach Anspruch 1, bei dem eine Polymerlösung eines Polycarbonatblockcopolymers, vorzugsweise eines Polyetherpolycarbonatblockcopolymers, unter Bildung eines flachen Bogens, der geliert und anschließend gewaschen und getrocknet wird, gegossen oder extrudiert wird, dadurch gekennzeichnet, daß die Polymerlösung ein hochmolekulares Quellmittel mit einem Molekulargewicht im Bereich von 3.000 bis 15.000 Dalton enthält und daß der extrudierte flache Bogen vor dem Gelieren einer Teilverdampfung von Lösungsmittel unterzogen wird.

5. Verfahren nach Anspruch 4, dadurch gekennzeichnet, daß das Quellmittel in einer Menge von 1 bis 8 Gewichts-%, vorzugsweise von 2 bis 5 Gewichts-% verwendet wird.

6. Verfahren nach einem der Ansprüche 4 bis 5, dadurch gekennzeichnet, daß das Quellmittel unter Polyethylenglycolen, Polypropylenoxid-Polyethylenoxid-Blockcopolymeren, Dextran, Inulin und Polyvinylpyrrolidon ausgewählt wird.

7. Verfahren nach Anspruch 6, dadurch gekennzeichnet, daß das Quellmittel ein Polyethylenglycol mit einem Molekulargewicht von 8.000 Dalton ist.

8. Verfahren nach einem der Ansprüche 4 bis 7, dadurch gekennzeichnet, daß die Polymerlösung eine Viskosität von 4.000 bis 50.000 mPa . s, vorzugsweise von 18.000 bis 25.000 mPa . s hat.

## Revendications

1. Membrane sous forme d'une feuille plate qui est particulièrement mais non exclusivement adaptée à l'emploi dans ce qu'on appelle l'hémodialyse/hémofiltration simultanées, cette membrane étant préparée à partir d'un copolymère séquencé de polycarbonate, de préférence un copolymère séquencé de polyéther-polycarbonate, caractérisée en ce qu'elle a une perméabilité hydraulique à l'eau entre 7,5 et 75 ml/m$^2$.h.mbar, de préférence de 23 à 38 ml/m$^2$.h.mbar et une perméabilité diffusive au chlorure (Cl-) supérieure à 10 x $10^{-4}$ cm/s, de préférence supérieure à 12 x $10^{-4}$ cm/s, une perméabilité diffusive à la vitamine $B_{12}$ supérieure à 2 x $10^{-4}$ cm/s, de préférence supérieure à 3 x $10^{-4}$ cm/s et une perméabilité diffusive à l'inuline supérieure à 0,5 x $10^{-4}$ cm/s, de préférence supérieure à 1,0 x $10^{-4}$ cm/s et en ce que la membrane retient l'albumine ayant un poids moléculaire de 68 000 daltons.

2. Membrane selon la revendication 1 caractérisée en ce qu'elle a une limite de séparation de 50 000 daltons.

3. Membrane selon l'une quelconque des revendications 1 et 2, caractérisée en ce qu'elle a une épaisseur de 20 à 60 μm, de préférence de 25 à 45 μm.

4. Procédé pour la production d'une membrane selon la revendication 1 dans lequel on coule ou extrude une solution de polymère formée d'un copolymère séquencé de polycarbonate, de préférence un copolymère séquencé de polyéther-polycarbonate, pour former une feuille plate que l'on gélifie puis lave et sèche, caractérisé en ce que ladite solution de polymère contient un agent gonflant de poids moléculaire élevé ayant un poids moléculaire dans la gamme de 3 000 à 15 000 daltons et en ce que la feuille plate extrudée est soumise à une évaporation partielle du solvant avant ladite gélification.

5. Procédé selon la revendication 4, caractérisé en ce que ledit agent gonflant est utilisé en une proportion de 1 à 8 % en poids, de préférence de 2 à 5 % en poids.

6. Procédé selon l'une quelconque des revendications 4 ou 5, caractérisé en ce que ledit agent gonflant est choisi parmi les polyéthylèneglycols, les copolymères séquencés de poly(oxyde de propylène)poly(oxyde d'éthylène), le dextran, l'inuline et la polyvinylpyrrolidone.

7. Procédé selon la revendication 6, caractérisé en ce que ledit agent gonflant est un polyéthylèneglycol ayant un poids moléculaire de 8 000 daltons.

8. Procédé selon l'une quelconque des revendications 4 à 7, caractérisé en ce que la solution de polymère a une viscosité de 4 000 à 50 000 mPa.s, de préférence de 18 000 à 25 000 mPa.s.